# EUROPEAN PATENT SPECIFICATION

(11) **EP 1 378 316 B1**
(45) Date of publication and mention of the grant of the patent: **28.12.2005**
(21) Application number: 03015026.2
(22) Date of filing: 02.07.2003
(51) Int. Cl.: B23Q 1/28, B23B 23/00

(54) **Clamping device for movable carriages of a machine tool**
Klemmvorrichtung für verfahrbare Teile einer Werkzeugmaschine
Système de blocage de parties coulissantes d'une machine-outil

(30) Priority: 04.07.2002 JP 2002195637
(43) Date of publication of application: 07.01.2004
(73) Proprietor: Mori Seiki Co., Ltd., Yamatokoriyama-shi, Nara-ken 639-1183 (JP)
(72) Inventor: Sakashita, Yoshinori,eng. c/o Mori Seiki Co.,Ltd., Yamatokoriyama-shi, Nara-ken, 639-1183 (JP)
(74) Representative: Kern, Ralf M.

(56) References cited:
- EP-A- 0 305 767
- EP-A- 1 034 877
- US-A- 6 021 560

## Description

### BACKGROUND OF THE INVENTION

The present invention relates to a clamping device for machine tools in which device a movable carriage mounted linearly movable on a fixed bed is positioned and fixed to a specified position.

In a lathe, for example, a headstock with a spindle fitted thereto is secured on one side of a fixed bed while a tailstock is provided linearly movable on the other side, and a workpiece is rotatably retained by the tailstock and a chuck of the headstock, in which state the workpiece is subjected to machining process. In this case, in order to prevent sways of the workpiece, it is practiced that the tailstock is positioned and fixed to the fixed bed with a clamping device.

As such a clamping device, conventionally, there has been proposed a clamping device in which a recessed portion extending along the direction of move of the tailstock is formed in the fixed bed, and in which tensile force is applied to right-and-left inner walls of the recessed portion by a plurality of pistons arranged on the tailstock so that a movable rack fixed to the pistons is engaged with a stationary rack fixed to an inner wall of the recessed portion, thereby positioning and fixing the tailstock (see Japanese Patent Laid-Open Publication No. 2000-263358).

With the adoption of the above-mentioned prior-art structure that tensile force is applied to the right-and-left inner walls of the recessed portion by the pistons to fix the tailstock, there is a need for increasing the number of pistons to ensure the fixing force, posing problems that the device as a whole would be proportionally increased in scale and that the number of parts would be increased.

From the document US-A-6 021 560 an operating method for a machine tool table operating device and a clamping device according to the preamble of claim 1 are known. Such a table operating device for a machine tool has a table on which a work is mounted and a table lifting means for supporting the table and for vertically moving the table. The table operating device has a vertically extended clamping member disposed underneath the table, a first reference plane provided on a side to the clamping member for positioning the table in a first direction on a horizontal plane; a second reference plane provided on a side to the clamping member for positioning the table in a second direction on the horizontal plane; a first pressing member for pressing the clamping member to the first reference plane, and a second pressing member for pressing the clamping member to the second reference plane.

The document EP 1 034 877 A2 describes a clamping device for machine tools capable of preventing the occurrence of impressions. In a clamping device for machine tools, a tailstock (movable carriage) is provided on a top face of a fixed bed and the tailstock is positioned and fixed with respect to the fixed bed. The tailstock is supported by linear-motion bearings (guides) which are disposed between the tailstock and the fixed bed. Blocks are slidably engaged with rails extending in the travel direction with rollers interposed between them. Further, a recess portion extending in the travel direction is formed in the top surface of the fixed bed. A cylinder mechanism is arranged so that left and right inner walls in the recess portion are pressed by a pair of pistons provided on the undersurface of a headstock.

The present invention having been accomplished in view of these circumstances, an object of the invention is to provide a clamping device for machine tools which is capable of ensuring the fixing force for the tailstock while maintaining compact as a whole of the device, and moreover capable of reducing the number of parts involved.

In order to achieve the above object, according to the present invention, there is provided a clamping device for machine tools as defined in claim 1.

Also desirably, in the fixed bed is formed a recessed portion in which a ball screw for moving the movable carriage is accommodated and disposed, and wherein the stationary rack is fixed to a step portion cut and formed at an opening corner portion of the recessed portion.

According to the clamping device of the present invention, since the wedge-shaped fitting surfaces are formed at mutually opposing portions of the stationary-side fitting member, which is fixed to the fixed bed, and the movable-side fitting member, which is disposed on the movable carriage, and the fitting surfaces of the two fitting members are fitted to each other by advancing and retreating the movable-side fitting member. Therefore, the movable carriage can reliably be fixed to the fixed bed without increasing so much the force necessary to move the movable-side fitting member toward the fitting direction, i.e., the clamping force.

Also, since the wedge-shaped fitting surfaces of the stationary-side fitting member and the movable-side fitting member are fitted to each other, the drive structure needs only to be such a simple one that the movable-side fitting member is driven into advance and retreat motions. As a result, the device as a whole can be made compact and the number of parts involved can be reduced.

Also, in the case where rack teeth formed in the fitting surfaces of the stationary rack and the movable rack are engaged with each other, a fixing force by the engagement of both rack teeth is added to the fixing force by the fitting of the wedge-shaped fitting surfaces to each other. Thus, the movable carriage can be fixed further reliably.

Still also, in the case where a recessed portion is cut and formed at an opening corner portion of the recessed portion of the fixed bed, in which the ball screw is accommodated and disposed, and where the stationary rack is fitted and fixed to the step portion, the stationary rack can be disposed by effectively utilizing a free space while being freed of interference with the ball screw. Thus, the device as a whole can be made further compact.

### BRIEF DESCRIPTION OF THE DRAWINGS

Fig. 1 is a perspective view of a combined machining lathe in which a clamping device according to an embodiment of the invention is provided;
Fig. 2 is a sectional side view of the clamping device;
Fig. 3 is a plan view of the clamping device; and
Fig. 4 is a main-part sectional view (taken along the line IV - IV of Fig. 3) of the clamping device.

### DETAILED DESCRIPTION OF THE PREFERRED EMBODIMENTS

Hereinbelow, an embodiment of the present invention is described with reference to the accompanying drawings.

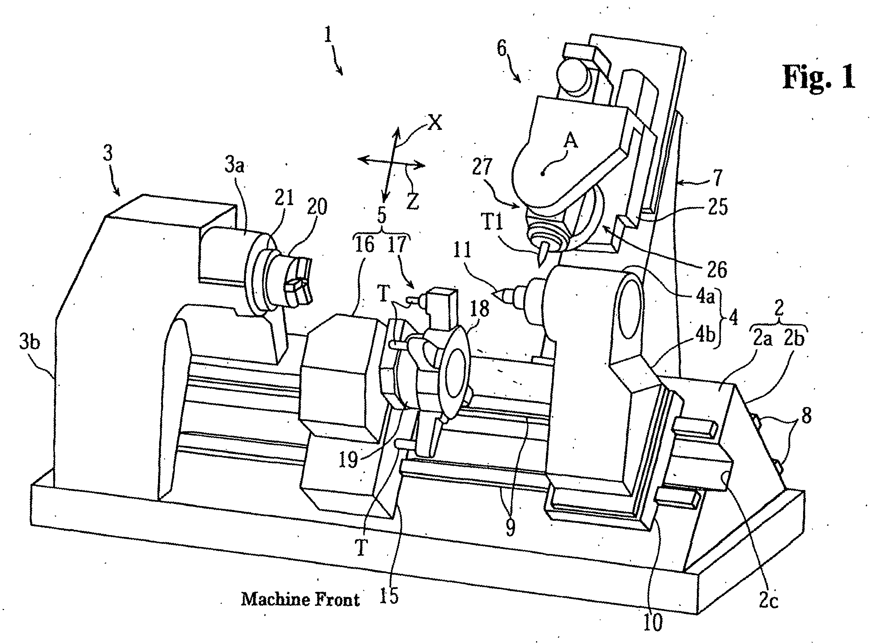

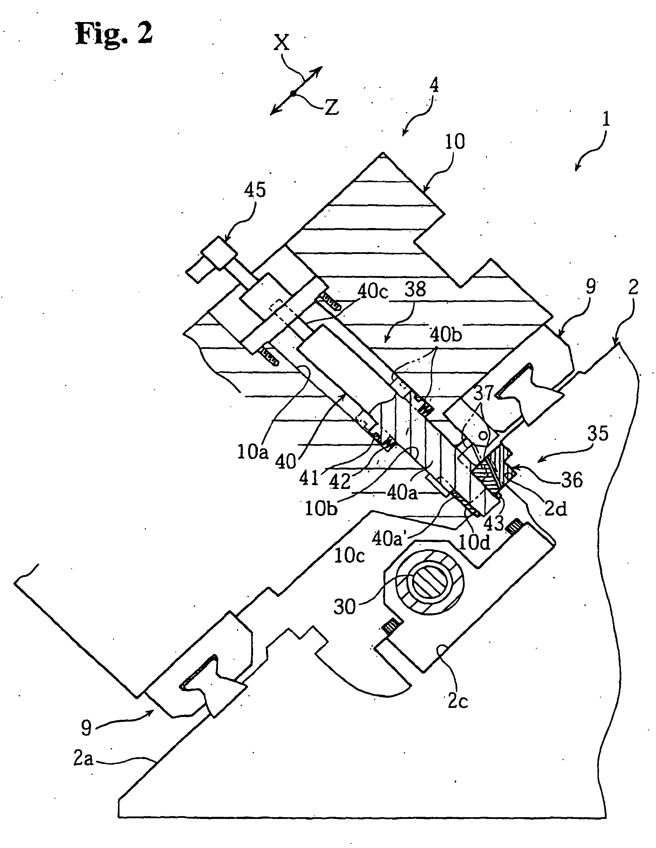

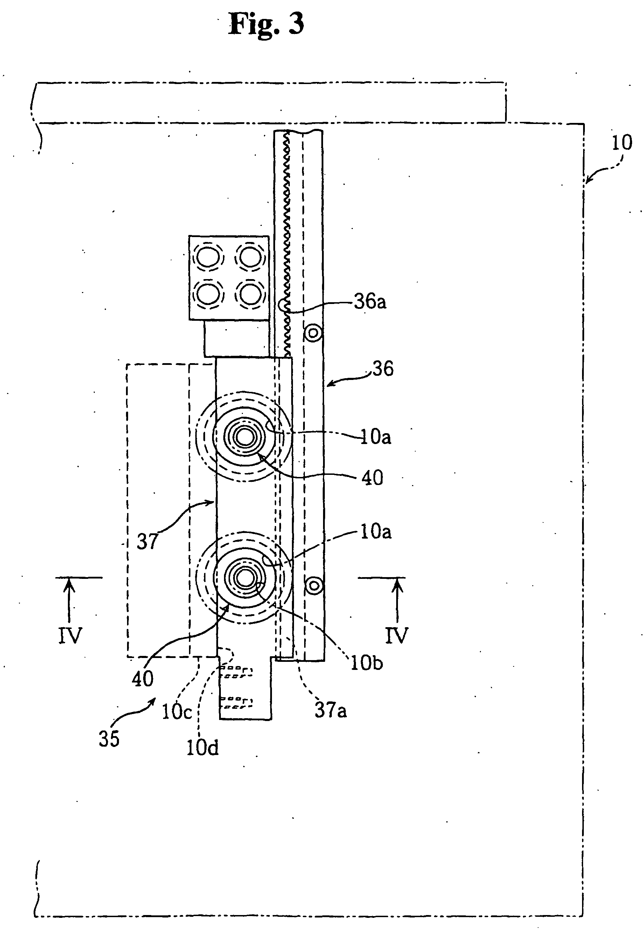

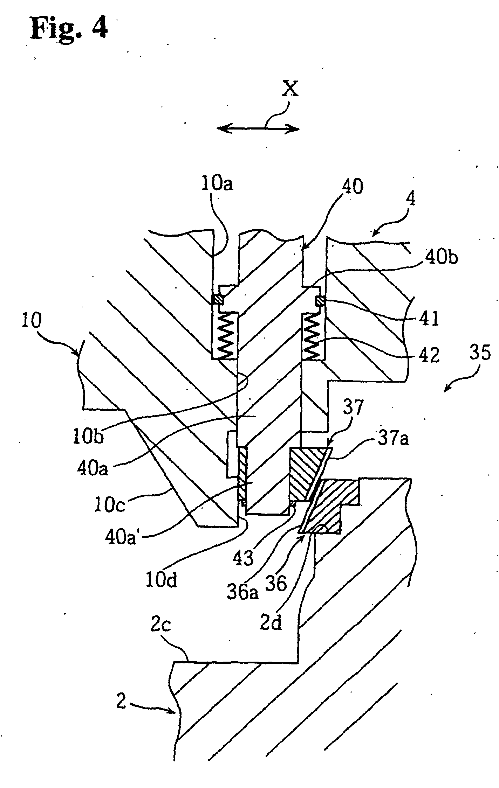

Figs. 1 to 4 are views for explaining a clamping device for machine tools according to an embodiment of the invention, where Fig. 1 is a perspective view of a combined machining lathe, Fig. 2 is a sectional side view of the clamping device, Fig. 3 is a plan view of the clamping device, and Fig. 4 is a main-part sectional view (taken along the line IV - IV of Fig. 3) of the clamping device.

Referring to the figures, reference numeral 1 denotes a combined machining lathe 1 having a fixed bed 2 which is formed into a triangular-prism shaped structure having a forward-tilted sloping surface 2a and a rearward-tilted sloping surface 2b as seen in a side view. As viewed from the machine front, a headstock 3 is disposed at a left-side longitudinal end portion of the forward-tilted sloping surface 2a of the fixed bed 2, a tailstock 4 is disposed on the right-side end portion, and further, a lower tool rest 5 is disposed on the forward-tilted sloping surface 2a between the headstock 3 and the tailstock 4 while an upper tool rest 6 is disposed on the rearward-tilted sloping surface 2b.

The headstock 3 is composed of a spindle portion 3a for rotatably supporting a spindle 21 to which a chuck 20 for grasping a workpiece is fitted, and a base portion 3b extending downward in continuation to the spindle portion 3a, where the base portion 3b is fixed to the fixed bed 2.

Two guide rails 8, 8 are laid down parallel to each other on the rearward-tilted sloping surface 2b of the fixed bed 2, and a column 7 is movably supported in the Z-axis direction by the guide rails 8. The upper tool rest 6 is movably mounted on the column 7 in the X-axis direction. This upper tool rest 6 is equipped with a support base 25 which is supported by the column 7 so as to be movable in the X-axis direction, and a tool rest body 27 which is supported by the support base 25 so as to be rotationally indexable and clampable to the indexed position about a pivot A through a rotational index unit 26. On this tool rest body 27, a tool T1 is removably set and driven into rotation by a built-in rotation drive unit (not shown).

Two guide rails 9, 9 are laid down parallel to each other lay on the forward-tilted sloping surface 2a of the fixed bed 2, and a saddle 15 is supported by the guide rails 9 so as to be movable in the Z-axis direction. On this saddle 15, the lower tool rest 5 is mounted so as to be movable in the X-axis direction. This lower tool rest 5 is equipped with a tool rest body 16 which is supported by the saddle 15 so as to be movable in the X-axis direction, and a turret 17 which is mounted on the right-hand side face of the tool rest body 16. This turret 17 is so made up that a turret head 18 with a plurality of tools T removably mounted on its outer periphery is supported by a rotational index base 19 so as to be rotationally indexable, and the turret 17 rotationally indexes and positions a required tool T to a specified machining position and clamps it to the machining position.

On the guide rails 9, a tailstock base 10 is provided so as to be movable in the Z-axis direction, where the undersurface of the tailstock base 10 is generally parallel to the forward-tilted sloping surface 2a. The tailstock 4, which is mounted on this tailstock base 10, has a structure that a tailstock portion 4a, by which a tailstock spindle 11 is supported so as to be advanceable and retreatable, is formed on a base portion 4b vertically fixed to the tailstock base 10. The axis line of this tailstock spindle 11 is coincident with the axis line of the spindle 21.

A recessed portion 2c extending in the longitudinal direction is formed between the guide rails 9 of the forward-tilted sloping surface 2a of the fixed bed 2, and a ball screw 30 is rotatably disposed at a bottom wall of the recessed portion 2c. To this ball screw 30 is fitted a nut portion (not shown) fixed to the tailstock base 10 so that rotationally driving the ball screw causes the tailstock 4 to move reciprocatingly and linearly.

A clamping device 35 comprises a prismatic stationary rack (stationary-side fitting member) 36 provided on the fixed bed 2 along the move direction of the tailstock 4, a prismatic movable rack (movable-side fitting member) 37 provided between the fixed bed 2 and the tailstock 4 so as to be movable, and a cylinder mechanism (advance-and-retreat driving means) 38 for driving the movable rack 37 into advance-and-retreat motions between a clamping position and an unclamping position.

The stationary rack 36 is tightened and fixed by a bolt to a step portion 2d cut in a rear-side opening corner portion of the recessed portion 2c, by which the stationary rack 36 is blocked from moving rearward in the X-axis direction. A front side face of this stationary rack 36 in the X-axis direction is formed upward, i.e., in a wedge shape obliquely sloping with respect to a later-described advance-and-retreat moving direction of the movable rack 37, and rack teeth 36a are formed in the sloping surface (fitting surface).

A pressing-and-supporting portion 10c is formed protrusively and integrally in the undersurface of the tailstock base 10. In this pressing-and-supporting portion 10c is formed a pressing-and-supporting surface 10d confronting the stationary rack 36 with a specified gap therebetween, where the movable rack 37 is in sliding contact with the pressing-and-supporting surface 10d.

The movable rack 37 is disposed between the stationary rack 36 and the pressing-and-supporting portion 10c. The rear side face of the movable rack 37 in the X-axis direction is formed into a downward-tilted wedge shape so as to be parallel to the sloping surface of the stationary rack 36. In this sloping surface (fitting surface) are formed rack teeth 37a which are engageable with the rack teeth 36a. The front side face of the movable rack 37 in the X-axis direction is in slidable contact with the pressing-and-supporting surface 10d, so that the movable rack 37 is blocked from moving forward in the X-axis direction, i.e., in a further leaving direction from the stationary rack 36.

The cylinder mechanism 38 is so designed as to make the movable rack 37 engaged with the stationary rack 36, and as to be driven into advance and retreat between a clamping position where a tensional force is exerted between the stationary rack 36 and the pressing-and-supporting portion 10c by the movable rack 37, and an unclamping position where the clamping is released. The cylinder mechanism 38 has a structure described below.

In the tailstock base 10 are formed a pair of right-and-left cylinder holes 10a as well as a smaller-diameter guide hole 10b adjacent thereto. Within each of the cylinder holes 10a and the guide hole 10b, piston portions 40b and a rod portion 40a of a piston rod 40, respectively, are inserted so as to be slidable.

A lower end portion 40a' of this rod portion 40a is protruding from the lower surface of the tailstock base 10 so as to be placed within the recessed portion 2c, and the movable rack 37 is fitted to the lower end portion 40a' and fixed by a lock member 43 for prevention of loosening and falling.

Further, sealing members 41 in sliding contact with the inner circumferential surfaces of the cylinder holes 10a are fitted to the piston portions 40b of the piston rod 40, and springs 42 for biasing the piston rod 40 toward the unclamping direction are provided between the piston portion 40b and the bottom portions of the cylinder holes 10a.

Also, an oil-pressure feed portion 45 for moving the movable rack 37 to the clamping position is connected to the cylinder holes 10a. An oil pressure fed to the oil-pressure feed portion 45 causes the piston rod 40 to go down, so does the movable rack 37 go down resultantly so as to be engaged with the stationary rack 36, making a tensional force in the X-axis direction act between the stationary rack 36 and the pressing-and-supporting portion 10c. As a result of this, the tailstock 4 is positioned and fixed to the fixed bed 2. With the oil pressure released, the springs 42 make the piston rod 40 go up, releasing the clamping and causing the movable rack 37 to move up to the unclamping position.

According to the clamping device of this embodiment, the stationary rack 36 is fixed to the fixed bed 2, the pressing-and-supporting portion 10c is protrusively formed on the tailstock base 10 so as to confront the stationary rack 36, and the wedge-shaped movable rack 37 is advanceably and retreatably disposed between the pressing-and-supporting portion 10c and the stationary rack 36, where the wedge-shaped fitting surface of the movable rack 37 is fitted to the fitting surface of the stationary rack 36 while the wedge-shaped rack teeth 36a, 37a are engaged with each other. Thus, a tensional force can be made to act between the stationary rack 36 and the pressing-and-supporting portion 10c by means of the movable rack 37, so that the tailstock 4 can reliably be positioned and fixed with duplex force of the engaging force between the rack teeth 36a, 37a and the aforementioned tensional force (fitting force).

Also in this embodiment, the wedge-shaped movable rack 37 is engaged between the stationary rack 36 and the pressing-and-supporting portion 10c. Thus, the drive structure needs only to be such a simple one that the movable rack 37 is driven into advance and retreat motions by the cylinder mechanism 38. As a result, the device as a whole can be made compact and the number of parts involved can be reduced.

Also in this embodiment, the step portion 2d is cut and formed at an opening corner portion of the recessed portion 2c of the fixed bed 2, where the ball screw 30 is accommodated and disposed, and the stationary rack 36 is fitted and fixed to the step portion 2d. Thus, the stationary rack 36 can be disposed by effectively utilizing a free space while being freed of interference with the ball screw 30. As a result, the device as a whole can be made further compact.

Although the above embodiment has been described on a case where the tailstock of a combined machining lathe is clamped, the clamping device of the present invention is not limited to this but applicable also for the clamping of the headstock, the movable table, the workpiece changer pallet or other movable carriages.

## Claims

1. A clamping device (35) for machine tools, especially for a lathe, comprising:
a movable carriage (4) which is movably mounted on a fixed bed (2) and which is clamped to a specified position on the fixed bed (2);
a stationary-side fitting member (36) which is fixed to the fixed bed (2) and which extends in a move direction of the movable carriage (4); and
a movable-side fitting member (37) which is provided on the movable carriage (4) so as to be movable in a direction crossing the move direction of the movable carriage (4); and
wherein the clamping device (35) further comprises advance-and-retreat driving means (38) for driving the movable-side fitting member (37) into advance-and-retreat motions between a clamping position where the movable-side fitting member (37) is fitted to the stationary-side fitting member (36) so that the movable carriage (4) is fixed to the fixed bed (2), and an unclamping position where the clamping is released;
**characterized in that**
wedge-shaped fitting surfaces each tilted with respect to the move direction are formed at mutually opposing portions of the stationary-side fitting member (36) and the movable-side fitting member (37),
the stationary-side fitting member (36) and the movable-side fitting member (37) are a stationary prismatic rack (36) and a movable prismatic rack (37), respectively;
and rack teeth (36a, 37a) engageable with each other are formed in the fitting surfaces of the stationary prismatic rack (36) and the movable prismatic rack (37).

2. The clamping device (35) for machine tools according to claim 1, wherein in the fixed bed (2) is formed a recessed portion (2c) in which a ball screw (30) for moving the movable carriage (4) is accommodated and disposed, and wherein the stationary rack (36) is fitted and fixed to a step portion (2d) cut and formed at an opening corner portion of the recessed portion (2c).

## Patentansprüche

1. Klemmvorrichtung (35) für Werkzeugmaschinen, insbesondere für eine Drehbank, umfassend:
einen verfahrbaren Wagen (4), der verfahrbar auf einem festen Bett (2) montiert ist und der an einer vorgegebenen Position auf dem festen Bett (2) festgeklemmt wird;
ein stationärseitiges Passteil (36), das an dem festen Bett (2) befestigt ist und sich in einer Bewegungsrichtung des verfahrbaren Wagens (4) erstreckt; und
ein Passteil (37) auf der verfahrbaren Seite, das auf dem verfahrbaren Wagen (4) vorgesehen ist, so dass es in einer Richtung quer zu der Bewegungsrichtung des verfahrbaren Wagens (4) bewegbar ist;
wobei die Klemmvorrichtung (35) ferner Vorwärts- und Rückwärts-Antriebsmittel (38) aufweist, um das Passteil (37) auf der verfahrbaren Seite in eine Vorwärts- und Rückwärts-Bewegung zwischen einer Klemmposition, wo das Passteil (37) auf der verfahrbaren Seite an dem stationärseitigen Passteil (36) befestigt ist, so dass der verfahrbare Wagen (4) an dem festen Bett (2) befestigt ist, und einer freigegebenen Position bewegbar ist, wo die Klemmwirkung freigegeben ist;
**dadurch gekennzeichnet, dass**
keilförmige Passflächen, die jeweils in bezug auf die Bewegungsrichtung gekippt sind, an wechselweise einander gegenüberliegenden Abschnitten des stationärseitigen Passteils (36) und des Passteils (37) auf der verfahrbaren Seite ausgebildet sind,
das stationärseitige Passteil (36) und das Passteil (37) auf der verfahrbaren Seite eine stationäre Prismen-Zahnstange (37) respektive aufweisen;
und dass Zähne (36a, 37a), die aneinander angreifen können, auf den Passflächen der stationären Prismen-Zahnstange (36) und der verfahrbaren Prismen-Zahnstange (37) ausgebildet sind.

2. Klemmvorrichtung (35) für Werkzeugmaschinen nach Anspruch 1, worin in dem festen Maschinenbett (2) ein hinterschnittener Abschnitt (2c) ausgebildet ist, in dem eine Kugel-Schraube (30) zum Bewegen des verfahrbaren Wagens (4) untergebracht und angeordnet ist, und worin die stationäre Zahnstange (36) auf einen stufenförmigen Abschnitt (2d) eingepaßt und daran befestigt ist, der an einem Eckenabschnitt der Öffnung des hinterschnittenen Abschnitts (2c) ausgeschnitten und ausgebildet ist.

## Revendications

1. Système de blocage (35) pour machines-outils, spécialement pour un tour, comprenant:
- une partie coulissante (4) qui est montée de manière mobile sur une couche fixe (2) et qui est bloquée à une position spécifiée sur une couche fixe (2);
- une pièce d'ajustement de côté stationnaire (36) qui est fixée à la couche fixe (2) et qui s'étend dans une direction de mouvement de la partie coulissante (4); et
- une pièce d'ajustement de côté coulissante (37) qui est pourvue sur la partie coulissante (4) pour être coulissante dans une direction croissant la direction de coulissement de la partie coulissante (4); et
- où le dispositif de blocage (35) comprend de plus des moyens d'actionnement pour avance et retrait (38) pour actionner la pièce d'ajustement de côté coulissante (37) dans les mouvements d'avance et retrait entre une position de blocage où la pièce d'ajustement de côté coulissante (37) est ajustée à la pièce d'ajustement de côté stationnaire (36) de sorte que la partie coulissante (4) soit fixée à la couche fixe (2), et une position non-bloquée où le blocage est délivré;
**caractérisé en ce que**
- les surfaces d'ajustement en forme de coin chacune inclinée à l'égard de la direction de coulissement sont formées aux portions mutuellement opposées de la pièce d'ajustement de côté stationnaire (36) et de la pièce d'ajustement de côté coulissante (37);
- la pièce d'ajustement de côté stationnaire (36) et de la pièce d'ajustement de côté coulissante (37) sont respectivement une crémaillère prismatique stationnaire (36) et une crémaillère prismatique coulissante (37) et les dents de crémaillère (36a, 37a) capables d'être engagées avec l'un l'autre sont formées dans les surfaces d'ajustement de la crémaillère prismatique stationnaire (36) et de la crémaillère prismatique coulissante (37).

2. Système de blocage (35) pour machines-outils, selon la revendication 1, où dans la couche fixe (2) est formée une portion creuse (2c) dans laquelle un boulon à bille (30) pour coulisser la partie coulissante (4) est accommodé et disposé, et où la crémaillère stationnaire (36) est ajustée et fixée à une portion à gradins (2d) coupée et formée à une portion de coin d'ouverture de la portion creuse (2c).
